# EUROPEAN PATENT SPECIFICATION

(11) **EP 3 535 173 B1**
(45) Date of publication and mention of the grant of the patent: **20.10.2021**
(21) Application number: 17829335.3
(22) Date of filing: 31.10.2017
(51) Int. Cl.: B61F 15/26, B61K 9/04, B61L 25/02, F16C 41/00, H02K 7/18

(54) **SELF-SUPPLIED DEVICE FOR THE LOGISTIC/DIAGNOSTIC MONITORING OF A RAILWAY VEHICLE**
SELBSTVERSORGUNGSVORRICHTUNG ZUR LOGISTISCHEN/DIAGNOSTISCHEN ÜBERWACHUNG EINES SCHIENENFAHRZEUGS
DISPOSITIF AUTONOME POUR SURVEILLANCE LOGISTIQUE/DIAGNOSTIQUE D'UNE VÉHICULE FERROVIAIRE

(30) Priority: 07.11.2016 IT 201600111758
(43) Date of publication of application: 11.09.2019
(73) Proprietor: Politecnico Di Torino, 10129 Torino (IT)
(72) Inventor: SOMA', Aurelio, 10129 Torino (IT); FRACCAROLLO, Federico, 15121 Alessandria (IT)
(74) Representative: Garavelli, Paolo
(86) International application number: PCT/IT2017/000237
(87) International publication number: WO 2018/083718

(56) References cited:
- WO-A1-2008/014766
- DE-A1- 2 551 009
- KR-A- 20020 054 442
- US-A1- 2007 208 841

## Description

The present invention refers to a self-supplied device, preferably of the bush cover type, for the logistic/diagnostic monitoring of a vehicle, in particular of a railway vehicle of the cargo type.

In the railway factor, the safety of transports and the preventinve monitoring are one of the major engineering challenges.

Regularly checking certain functional parameters of trains to detect anomalies and dangerous malfunctions is the basis of the structural monitoring of railway vehicles.

In the latest years, the interest for monitoring the operating conditions of cargo wagons has strongly increased, as testified by numerous publications found in literature and the first dedicated devices present on the market. Companies operating in this sector have the need of timely knowing the operating conditions of wagons, in order to be able to perform aimed maintenance operations. Without information, companies owning the wagons perform programmed maintenance campaigns in order to prevent the occurrence of failures which could bring about, in the best of cases, discarding the wagon by the railway company which performs the traction service or in the worst case derailments with disastrous consequences for the convoy and the infrastructure. In the time interval, generally of many years, which passes between a programmed maintenance intervention and the following, there is no knowledge of the actual conditions of the wagon and its subsystems.

Currently, the only parametric information available are supplied by the apparatuses installed along the railway network, separated by tens of kilometers. Instead, to be able to locate and intervene previously on a possible incoming failure state, it would be necessary to have available a monitoring of a continuous type and its related communication system, capable of timely warn the personnel driving the train and the maintenance operators of the company owning the wagon. The system should then be able to provide clear information about where and when the signaled problem occurred. However, the lack of an electric plant on board the wagon with which the monitoring systems of the "on-board" type are supplied, is currently the biggest obstacle for developing and permanently installing these devices.

The option of wiring the cargo wagons currently cannot be followed, due to the high installation costs which the installation of the electric plant would require on the existing vehicle park. Coherently with the most recent literature, the present invention therefore proposes to join to the development of the monitoring system, the development of an energy harvester capable of providing the system with the electric supply necessary for its self-supply.

Different technologies and solutions have been proposed for recovering the energy available on board the wagon: the choice of adopting one with respect to another affects the energy consumption of the monitoring device, the sampling frequency and the type of sensors which have to be installed. An essential feature which a monitoring system must have is the high reliability coupled with the absence of maintenance and at a low device cost.

In particular, pointing out an incoming derailment with an alarm, the present invention can then refer to a monitoring system (On Board Unit) of a railway cargo wagon about the in-line measure of the main travelling parameters of the vehicle.

Within the currently existing solutions, the main monitored quantity is the bush temperature, also defined as "hot box" of the wagons of a train, assembled at the ends of each axle between wheels.

As known, a bush includes a bearing assembled on the axle immersed in grease which, due to wear, runs the risk of being anomalously heated, getting to cause not only damages to the bush, but also, as consequence thereof, the breakage of the axle with consequent train derailment.

Known monitoring devices for the temperature of a train axle are given by temperature detector to measure the temperatures of bushes through devices called RTB. Due to reliability and connectivity reasons, the RTB sensors are not assembled in bushes themselves, but fastened to the ground next to the route.

All RTB detectors are arranged along both sides of the railway through the so-called measuring portals. The temperature of the bushes of a train can then be measured at a distance, when the train passes through a infrared rays detector.

However, these sensors have the common inconvenience of not being able to efficiently monitor the different types of bushes because they can have varying structures and sizes.

Another inconvenience of these sensors is linked to the fact that their presence along the line is not so capillary and the failure of a measure, for safety reasons, implies a speed reduction of the convoy till the following measure point, with an increase of travelling times and consequent increase of the transport costs.

Another major parameter to identify the wear status of the railway axle can be determined, for example, by the monitoring of accelerations measured in a bush. In fact, an excessive value of the measured accelerations is an index of an anomalous wear of the mechanical components of the wagon, which could bring about the same previously described catastrophic events, axle breakage and consequent train derailment.

A further parameter useful for maintenance purposes of the railway wagon is linked to the knowledge of the real mileage travelled by the wagon. The maintenance of railway materials is performed, in fact, both on a time and on a kilometer base. These data are nowadays collected by owners or managers of the fleet of wagons through the detection of GPS data or of special odometers assembled on the axles. These two measure methodologies of travelled distances are either inaccurate, in case of measures through GPS technologies due to errors due to an incomplete "fix" of the satellites with the receiver assembled on board the wagon, or are complex/costly/invasive to be performed due to the installation of optical encoders, or the like, for an actual measure. It is also necessary to remember that these instruments can in turn have problems of reliability and maintenance needs. As regards the logistic aspect of the railway goods transport, it is mandatory to know the location of the convoy, in order to optimize the transport planning.

Cargo wagons have no type of electric supply on board and no type of wiring is provided both as regards the supply and as regards the data transmission of sensors installed on board; every type of wiring invalidates the homologation of the wagon itself.

DE2551009A1, US6860453B2, JP2013241134, TW200823093, EP1236633 and WO2011117718 disclose prior art systems and processes.

Therefore the object of the present invention is to solve the above prior art problems, by providing a self-supplied device, preferably of the bush cover type, for the logistic/diagnostic monitoring of a vehicle, in particular of a railway vehicle of the cargo type, which comprises at least one autonomous electric generator, for example of the axial type, in order to guarantee the supply of one or more sensors and/or of one or more systems for the transmission of data detected on board the vehicle itself.

Moreover, an object of the present invention is to provide a device which allows detecting the temperature of the bush of a cargo train and can be directly installed on board the vehicle.

Another object of the present invention is to provide a device which allows detecting the accelerations of the bush of a vehicle, for example of a cargo train, directly on board the vehicle itself.

A further object of the present invention is to provide a device which allows also performing the function of odometer/tachometer for monitoring the distance travelled by the vehicle and its speed.

Moreover, an object of the present invention is to provide a device which allows detecting the position of the vehicle, for example a train, through a geolocation system.

Another object of the present invention is to provide a device which allows sending data thereby collected by the temperature and acceleration sensors, in turn sent through a short-range wireless communication system, and together with those related to the position detected by the geolocation system, to a control station through a telecommunication system, thereby making a double communication network, a local one which involves only the vehicle, and a global one between vehicle and control station.

Moreover, an object of the present invention is to provide a device which allows integrating, inside a bush cover, at least one temperature sensor and/or at least one acceleration sensor and/or at least one wireless transmission system and/or at least one info-mobility system and/or at least one autonomous electric generator for the electric supply of all the above systems and/or sensors.

Another object of the present invention is to provide a device for the logistic/diagnostic monitoring of a vehicle, in particular of a railway vehicle of the cargo type, which allows filtering, analyzing and transmitting particular dynamic parameters of the vehicle.

The above and other objects and advantages of the invention, as will result from the following description, are obtained with a self-supplied device for the logistic/diagnostic monitoring of a vehicle through such device as claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears rom the enclosed claims.

The present invention will be better described by some preferred embodiments thereof, provided as a non-limiting example, with reference to the enclosed drawings, in which:

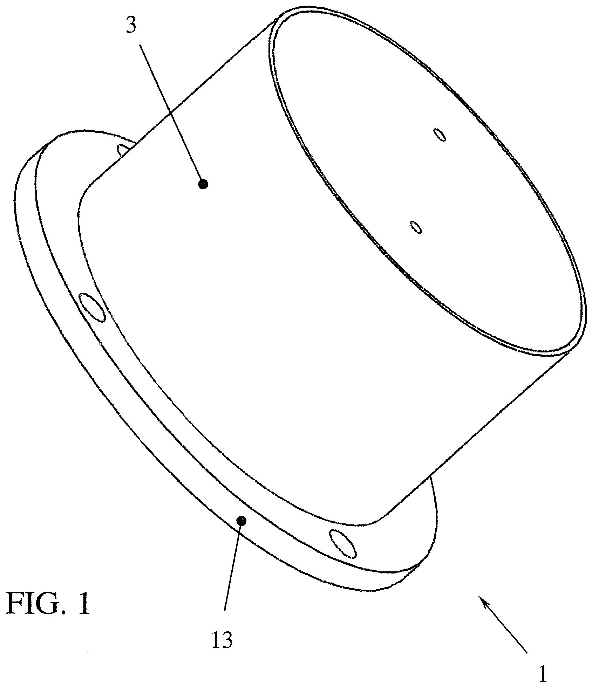

- Figure 1 shows a perspective view of a preferred embodiment of the device according to the present invention;
- Figure 2 shows a sectional view of a railway bush in view of the application of a device according to the present invention;
- Figure 3 is an exploded perspective view of a preferred embodiment of the device according to the present invention;
- Figure 4 shows a graph which represents the vertical acceleration (in the ordinates) as function of time (in the abscissas) of a railway vehicle under normal traveling conditions; and
- Figure 5 shows a graph which represents the vertical acceleration (in the ordinates) as function of time (in the abscissas) of a railway vehicle under travel conditions when a dynamic alarm condition occurs.

In general, the present invention deals with a self-supplied device for the logistic/diagnostic monitoring of a vehicle through such device, in particular of a railway vehicle of the cargo type: for such purpose, it will be described below, merely as an example, how the device according to the present invention will be preferably described as applied to a railway vehicle, such as a cargo wagon, but it is wholly clear that the same device can be applied to any other type of vehicle without thereby departing from the scope of the present invention.

The device according to the present invention is therefore aimed to provide information and/or services related to monitoring and info-mobility for vehicles: in the particular case of railway vehicles, for example of the cargo type, the device according to the present invention can be specifically arranged to provide information and/or signals and/or alarms related to the detection of an incoming derailment of such vehicle.

The solution proposed in the present invention can be related, in general and as will be described below in more detail, to a rotary harvester of the type with generator with axial magnetic flux, which allows easily installing permanent magnets in the head of the fastening screws of the cover rotating inside. In such case, the installed magnets are not invasive with respect to the safety of the railway axle. They are further easily installed without modifying the mechanical features. Other proposed installations for generators with radial magnetic flux require the installation of a rotary element integral with the railway axle, which can bring about local modifications of the bush-bearing assembly. Instead, the presence of magnets as proposed in the present invention leaves unchanged the type of bush-bearing assembly anyway guaranteeing the presence of the magnetic flux.

Moreover, a possible radial installation can be less safe and more costly.

Therefore, with reference to the Figures, it is possible to note that the device (1) is adapted to be applied to at least one axle (20) of a vehicle, such as for example to the bush body (12) of a railway bush of the axle of a railway vehicle, such axle (20) being rotating for example around a rotation axis (R-R) during the travel of such vehicle and, advantageously, such device (1) according to the present invention comprises at least one autonomous electric generator, preferably of the axial type, adapted to generate electric power from the rotation of the axle (20), such electric power being used to supply with current one or more sensors and/or systems arranged on board the device (1) itself; in addition, as can be seen below in more detail, the autonomous electric generator can also be adapted, by suitable conditioning the signal generated by the electric generator following the rotation of such axle (20), to perform the function of an odometer/tachometer.

Preferably, and within the scope of the present invention, such sensors and systems can be mainly aimed to the detection of travelling parameters, such as travelled distance and speed, and of the temperature and acceleration conditions of the railway bush, together with sending, through a info-mobility system, both data detected by the sensors and the vehicle position. As can be seen below, the whole transmission of data measured in the device (1) is preferably managed by systems for the wireless transmission, technology which can allow managing the communication of sampled parameters also on board the vehicle between wagon and wagon and/or between wagon and locomotive, thereby locally managing possible alarms derived by a real time monitoring.

In such case, the device (1) according to the present invention will be mechanically uncoupled from the vibrations of the railway axle, since the magnetic flux which supplies the turns will be completely axial. In this way, possible vibrations, very high in a railway bush, do not represent a strong potential source of damages for the generator. Advantageously, as will be seen below in more detail, the autonomous electric generator of the device (1) according to the present invention is capable both of generating electric power though not being mechanically connected to the vehicle traction system, and in particular to the axle (20) of such vehicle. The autonomous electric generator of the device (1) according to the present invention can further be adapted to perform the function of odometer/tachometer by suitably conditioning the signal generated by the electric generator, always following the rotation of such axle (20). For such purpose, the autonomous electric generator is composed of at least one winding (4) fixed with respect to the rotation of the axle (20), preferably at least with respect to the rotation axis (R-R), such winding (4) being composed of at least one turn of electrically conducting material, and of at least one magnet (5) fastened to such axle (20) to be rotated, for example around the rotation axis (R-R), of the axle (20), such winding (4) being adapted to generate an electric voltage when placed at the interface with at least one rotary magnet (5).

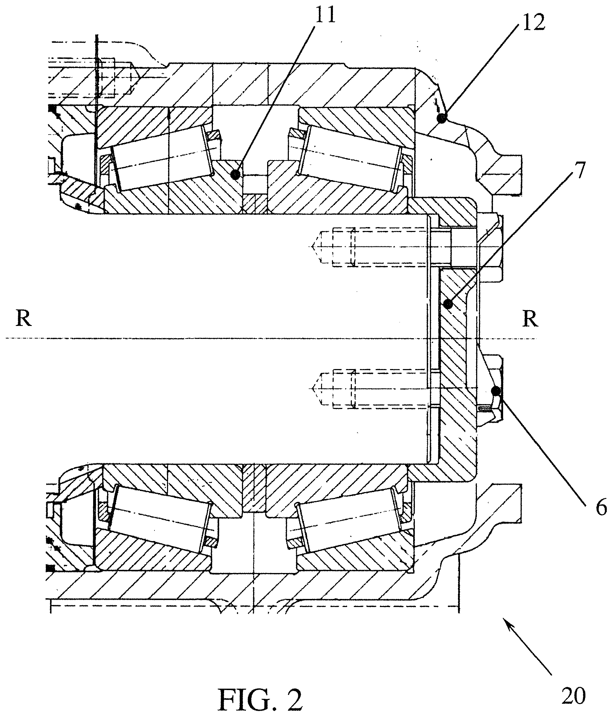

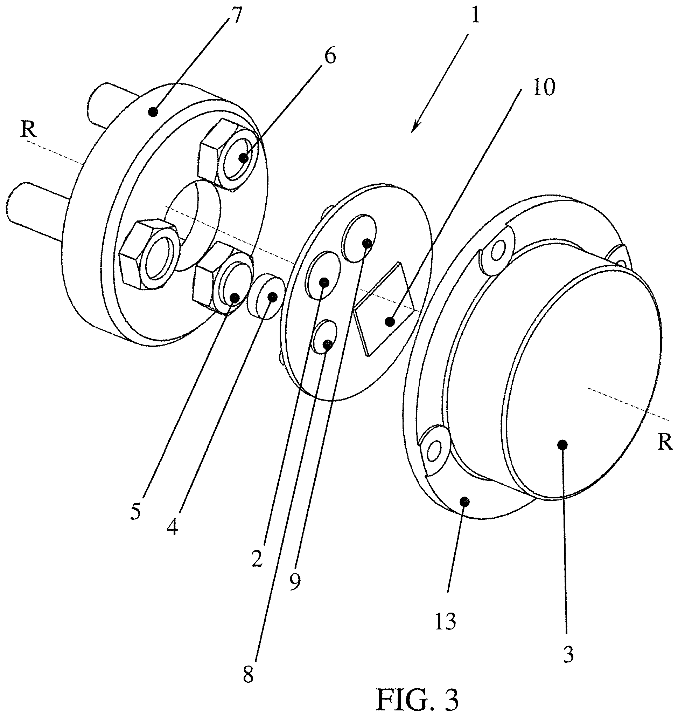

With particular reference to Figure 2, it is possible to note an example of a railway bush seen in section, where one can see in evidence the bush body (12), the bearing (11), the bearing stop (7) and the fastening screws (6) of the stop (7): with particular reference to Figure 3, it is possible to note that, preferably, the rotary magnet (5) is placed on at least one head of the fastening screw (6) of the bearing stop (7) of the bush. When the vehicle advances, the fastening screws (6) of the bearing stop (7) of the bush, being integral with the axle (20), rotate, for example around the rotation axis (R-R). Since the winding (4) is in a fixed position with respect to the screws (6) which have on their head one or more of the magnets (5), a rotary magnetic flux is created, variable in time due to the relative motion between at least one of such magnets (5) placed on at least one screw (6) and the winding (4) itself: this variation of the magnetic flux generates a difference of potential at the winding (4) terminals with consequent generation of an alternate electric power.

Obviously, the device (1) according to the present invention can further comprise suitable means for managing and accumulating the electric power generated on the winding and for reading the above alternate electric power to perform the function of odometer/tachometer. This function is performed by measuring the frequency of the generated voltage, scaling this property depending on the magnets being present and on the vehicle (4) wheel.

For the purposes of the present invention, and of the preferred function for which the device (1) according to the present invention is aimed, this latter one can further comprise:
- at least one temperature sensor (2); and/or
- at least one acceleration sensor (9); and/or
- at least one wireless transmission system, in particular for the transmission of data between bush covers and/or bush cover and locomotor for the timely management of alarms; and/or
- at least electronic means adapted to measure the frequency of the electric power generated in order to perform the function of odometer/tachometer; and/or
- at least one info-mobility system (10) comprising at least one geolocation system and/or at least one telecommunication system and/or at least one wireless communication system for exchanging data with the various measuring sensors/systems and, in particular, for the reception of data from one or more of such bush covers (3); the systems and/or sensors and/or means being supplied with electric power by at least one autonomous generator by interposing means for managing and accumulating the electric power, these latter ones composed, for example, of at least one circuit for managing the generated electric power and of at least one backup battery, preferably each of such sensors and/or of such wireless systems and/or of info-mobility and/or used means being supplied by a specific circuit dedicated thereto.

Preferably, the device (1) according to the present invention comprises at least one bush cover (3) for containing such fixed winding (4) of the above generator and of the above sensors and/or systems and of fastening the device (1) itself to the bush body (12), for example by interposing a perimeter flange (13) and related screws/bolts (not shown).

Obviously, the device (1) can be made of a suitable material such as to install, on the opposite face to the rotary axle, the windings and the temperature sensor. On the other side, in order to thermally insulate them, the electronic accumulating devices, the devices for processing the signal, the acceleration sensors and the wireless transmission devices will be installed in a more protected way.

Obviously, at least part of the bush cover (3) element can be made of a suitable material to guarantee the antenna protection and the signal transmission.

Preferably, the wireless transmission system is composed of a short-range RF transmission system of the ZigBee type or the like, for data detected by the above sensors to a coordinator connected to the info-mobility system and/or to the locomotor for the timely management of alarms coming from the various sensors: in particular, the geolocation system of the info-mobility system is of the GPS type, while the telecommunication system of the info-mobility system is of the type with GSM/GPRS transmission for relaying data received from the wireless transmission system to a suitable remote receiving system (not shown).

Preferably, the temperature sensor (2) is composed of at least one MEMS sensor of the Microchip MCP9803 type or the like, having a temperature range from -55°C to +125°C and a supply voltage from 2.7V to 5.5V. The sensor (2) is therefore connected to a microprocessor of the Texas Instrument cc2530 type or the like, which allows sampling and transmitting data measured by the sensor (2) through the wireless transmission system.

Preferably, the acceleration sensor (9) is a tri-axial accelerometer composed of a MEMS sensor of the Analog Device ADXL345 type or the like, having an acceleration measuring range on three axes equal to ±16g and a supply voltage from 2V to 3.6V. The sensor (9) is connected to a microprocessor of the Texas Instrument cc2530 type or the like, which allows sampling and transmitting data measured by the sensor (9), always through the wireless transmission system.

Preferably, the odometer/tachometer functionality is obtained through the help of a microcontroller of the Microchip PIC12F1612-I/P type, capable of frequency sampling the voltage generated by a winding of the generator and of suitably scaling it according to the number of magnets being present and/or the wheel radius of the vehicle.

The present invention can be applied to a process for a logistic/diagnostic monitoring for vehicles, in particular for railway vehicles of the cargo type, preferably implemented through at least one device (1) like the one previously described for detecting an incoming vehicle derailment.

Within the monitoring of accelerometer signals of a vehicle, in order to determine the occurrence of critical phenomena, it is necessary to handle a high amount of data and information.

A first parameter, which allows discriminating the presence or less of the occurrence of critical vibration phenomena, is the sampling frequency. In order to evaluate critical vibrating phenomena for the travel dynamics of the railway vehicles, the sampling frequency will have to be at least of some hundreds of Hertz till at least 1 kHertz.

The data analysis devices (CPU) installed on board the bush do not have available big memories for saving data, but they could handle the analogue signal detected "almost in real time" to determine the occurrence of possible incoming critical aspects, to then send only some mainly digital information when thresholds and alarms are exceeded.

Though using techniques for treating and analyzing signals known in literature which allow evaluating mean parameters of the dynamic behavior of a vehicle or of a vehicle component, with the current state of the art within the railway engineering, there is no efficient algorithm or device (which can be installed on cargo trains) for the dynamic determination of incoming derailments and for simultaneously detecting the occurrence of severe damages on axle/bush components.

In fact, it is not known how to recognize a phenomenon of incoming derailment or a phenomenon of wheel vibration with self-supplied compact devices and through digital alarms.

Such critical phenomena of the railway dynamics, in fact, have high vertical accelerations. The vertical acceleration of a cargo vehicle in a bush is anyway subjected to non-neglected mean values during the normal train travel due to the normal dynamics of the vehicle and of the route irregularity. Moreover, the presence of irregularities on a localized route, such as exchanges, creates very high acceleration peaks. Basing the data compression on the analysis of acceleration peaks (as proposed in literature) compared with pre-established thresholds, numerous false positive alarms can be detected, when there are line discontinuities or irregularities which anyway do not bring about a critical situation by themselves only.

On the contrary, basing the data compression on the analysis of the vibration signal and on the analysis of means or the analysis of RMS, it is required to compare the mean values with thresholds which must be calibrated on the type of route and on the knowledge of the mean irregularity of the route, this requiring long calibration times or the real time comparison with a data base of thresholds also highly affected by the dynamics of the vehicle type.

The idea of the present invention is computing, through a moving mean, the Root Mean Square/crest factor, in order to obtain a simple dynamic alarm parameter, which can point out the occurrence of axle critical points. The phenomenon of early derailment brings about RMS threshold ratio values which tend to unity, in a sudden way, with an order of magnitude greater than the normal travel value. While the vibration of wheels or the critical points of mechanical components of the axle bring about a value of the RMS/crest factor ration with repeated and continuous values greater than the travel noise values.

In particular, such process comprises the steps of:
a) sampling the accelerometer signal, detected for example by at least one acceleration sensor (9), on the three orthogonal directions at high frequency (up to 1kHerz);
b) extracting a segment on a time base of the accelerometer signal sampled in step a);
c) computing the Root Mean Square, RMS, value of the acceleration signal of the segment obtained in step b);
d) computing the crest factor (computed as ratio between the maximum acceleration value in the segment of step b) and the RMS value);
e) transmitting, for example through the telecommunication system, data about maximum and minimum acceleration and RMS values for every segment; and
f) comparing values transmitted in step e) with the pre-set threshold values for the derailment.

The process as described above, through an analysis of vibrating data therefore allows recognizing, through alarms, the main dynamic parameters with particular reference to the incoming vehicle derailment.

The suitable analysis and comparison of sampled data further allows a "lean data management" with a better energy/computing efficiency when managing the physical quantities measured with the device (1) according to the present invention.

In particular, such process allows being implemented through a simple algorithm to be performed with the previously described device (1), to allow evaluating the crest factor and the RMS value of the acceleration on three axes in order to determine different critical dynamic behaviors of the vehicle and provide consequent alarms.

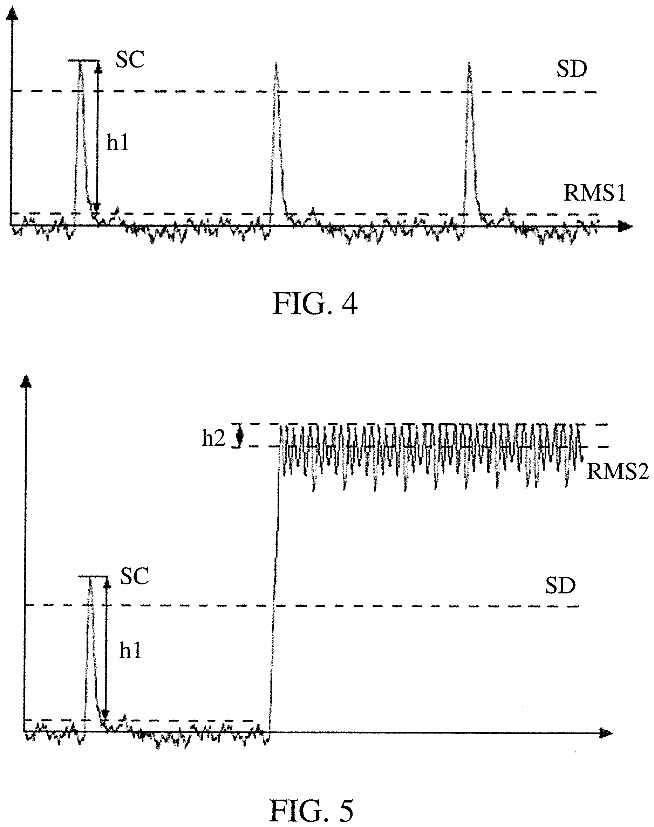

In fact, as can be noted in particular in the graphs of Figures 4 and 5, the offset between the crest factor and the RMS value can be advantageously used to evaluate the occurrence of catastrophic events, such as the derailment.

For example, as shown in particular in the graph of Figure 4, the passage on an exchange SC under a travel condition of a railway vehicle has a high crest factor value (hi) and a RMS value (RMS 1) which remains within the normal mean values of the route, for example below a pre-set threshold value SD for derailment; the ratio between these two values is much lower than unity.

The derailment condition, as shown in particular in the graph of Figure 5, instead has a crest factor value (h2) and a RMS value (RMS 2) which, with very similar values one to the other, determine a ratio next to unity. The RMS/h ratio therefore represents an index used as discriminant of warning and/or danger conditions. Another very sensible problem is the vibration which can be determined from algorithms based on the processing of such data.

## Claims

1. Self-supplied device (1) for the logistic/diagnostic monitoring of a railway vehicle of the cargo type, adapted to be applied to at least one axle (20) of said vehicle through a railway bush with which said self-supplied device (1) is equipped, said axle (20) being rotating during the travel of said vehicle, said device (1) comprising at least one autonomous electric generator adapted to generate electric power from a rotation of said axle (20), said electric power being used for supplying with current one or more sensors and/or systems arranged on board said device (1), said autonomous electric generator being composed of at least one winding (4) adapted to be fixed with respect to said rotation of said axle (20), said at least one winding (4) being composed of at least one turn of an electrically conducting material, and of at least one rotary magnet (5) adapted to be fastened to said axle (20) and to be rotated by said axle (20), said at least one winding (4) being adapted to generate an electric voltage when placed at an interface with the at least one rotary magnet (5), said railway bush comprising a bush body (12), a bearing (11), a bearing stop (7) and fastening screws (6) for fastening said stop (7) to said axle (20), **characterized in that** said at least one rotary magnet (5) is placed on at least one head of one of said fastening screws (6).

2. Device (1) according to the previous claim, **characterized in that** said autonomous electric generator is of the axial type.

3. Device (1) according to any one of the previous claims, **characterized in that** it comprises at least one bush cover (3) for containing said at least one fixed winding (4) of said generator and of said sensors and/or systems and for fastening said device (1) to the bush body (12) of said axle (20).

4. Device (1) according to the previous claim, **characterized in that** said autonomous electric generator is adapted to perform a function of odometer/tachometer by conditioning a signal generated by said electric generator following said rotation of said axle (20).

5. Device (1) according to any one of the previous claims, **characterized in that** it comprises means for managing and accumulating said electric power generated on said at least one winding (4).

6. Device (1) according to any one of the previous claims, **characterized in that** it comprises:
- at least one temperature sensor (2); and/or
- at least one acceleration sensor (9); and/or
- at least one wireless transmission system; and/or
- at least electronic means adapted to measure the frequency of the electric power generated in order to perform said odometer/tachometer function; and/or
- at least one info-mobility system (10) comprising at least one geolocation system and/or at least one telecommunication system and/or at least one wireless communication system for the reception of data from one or more of said bush covers (3), said systems and/or sensors and/or means being supplied with electric power by at least one autonomous generator by interposing said means for managing and accumulating the electric power.

7. Device (1) according to claim 6, **characterized in that** said means for managing and accumulating said electric power are composed of at least one circuit for managing the generated electric power and of at least one backup battery.

8. Device (1) according to claim 6 or 7, **characterized in that** each one of said sensors and/or of said wireless systems and/or of said info-mobility systems and/or said means is supplied by a specific circuit dedicated thereto.

## Patentansprüche

1. Selbstversorgende Vorrichtung (1) für eine logistische/diagnostische Überwachung eines Schienenfahrzeugs des Frachttyps, die an mindestens einer Achse (20) des Fahrzeugs durch eine Schienenbuchse anbringbar ist, mit der die selbstversorgende Vorrichtung (1) ausgestattet ist, wobei sich die Achse (20) während der Fahrt des Fahrzeugs dreht, wobei die Vorrichtung (1) mindestens einen autonomen Stromgenerator umfasst, der geeignet ist, aus einer Drehung der Achse (20) elektrische Leistung zu erzeugen, wobei die elektrische Leistung verwendet wird, um einen oder mehrere Sensoren und/oder Systeme, die an Bord der Vorrichtung (1) angeordnet sind, mit Strom zu versorgen, wobei der autonome elektrische Generator aus mindestens einer Wicklung (4) besteht, die in Bezug auf die Drehung der Achse feststellbar ist (20), wobei die mindestens eine Wicklung (4) aus mindestens einer Windung aus einem elektrisch leitenden Material besteht und aus mindestens einem Drehmagneten (5), der an der Achse (20) befestigt und durch die Achse (20), wobei die mindestens eine Wicklung (4) angepasst ist, um eine elektrische Spannung beim Anlegen an eine Schnittstelle mit dem mindestens einen Drehmagneten (5), wobei die Eisenbahnbuchse einen Buchsenkörper (12), ein Lager (11), einen Lageranschlag (7) und Befestigungsschrauben (6) für Befestigung des Anschlags (7) an der Achse (20), **dadurch gekennzeichnet, dass** der mindestens eine Drehmagnet (5) auf mindestens einem Kopf einer der Befestigungsschrauben (6) platziert ist.

2. Vorrichtung (1) nach dem vorhergehenden Anspruch, **dadurch gekennzeichnet, dass** der autonome elektrische Generator vom axialen Typ ist.

3. Vorrichtung (1) nach einem der vorhergehenden Ansprüche, **dadurch gekennzeichnet, dass** sie mindestens eine Buchsenabdeckung (3) zum Aufnehmen der mindestens einen festen Wicklung (4) des Generators und der Sensoren und/oder Systeme umfasst und zum Befestigen der Vorrichtung (1) an dem Buchsenkörper (12) der Achse (20).

4. Vorrichtung (1) nach dem vorhergehenden Anspruch, **dadurch gekennzeichnet, dass** der autonome elektrische Generator angepasst ist, um eine Funktion eines Kilometerzählers/Tachometers durch Konditionieren eines Signals auszuführen, das von dem elektrischen Generator nach der Drehung der Achse (20) erzeugt wird.

5. Vorrichtung (1) nach einem der vorhergehenden Ansprüche, **dadurch gekennzeichnet, dass** sie Mittel zum Verwalten und Akkumulieren der an der mindestens einen Wicklung (4) erzeugten elektrischen Leistung umfasst.

6. Vorrichtung (1) nach einem der vorhergehenden Ansprüche, **dadurch gekennzeichnet, dass** sie umfasst:
- mindestens einen Temperatursensor (2); und/oder
- mindestens einen Beschleunigungssensor (9); und/oder
- mindestens ein drahtloses Übertragungssystem; und/oder
- mindestens elektronische Mittel, die geeignet sind, die Frequenz der erzeugten elektrischen Leistung zu messen, um die Funktion des Kilometerzählers/Tachometers auszuführen; und/oder
- mindestens ein Info-Mobility-System (10) mit mindestens einem Geolokalisierungssystem und/oder mindestens einem Telekommunikationssystem und/oder mindestens einem drahtlosen Kommunikationssystem zum Empfang von Daten von einer oder mehreren der Buschdecken (3), wobei die Systeme und/oder Sensoren und/oder Mittel von mindestens einem autonomen Generator mit elektrischer Energie versorgt werden, indem die Mittel zum Verwalten und Akkumulieren der elektrischen Energie zwischengeschaltet werden.

7. Vorrichtung (1) nach Anspruch 6, **dadurch gekennzeichnet, dass** die Mittel zum Verwalten und Akkumulieren der elektrischen Leistung aus mindestens einer Schaltung zum Verwalten der erzeugten elektrischen Leistung und aus mindestens einer Pufferbatterie bestehen.

8. Vorrichtung (1) nach Anspruch 6 oder 7, **dadurch gekennzeichnet, dass** jeder der Sensoren und/oder der drahtlosen Systeme und/oder der Infomobilitätssysteme und/oder der Mittel von einer dafür bestimmten Schaltung gespeist wird.

## Revendications

1. Dispositif d'auto-alimentation (1) pour une surveillance logistique/diagnostic d'un véhicule ferroviaire de type cargo, adapté pour être appliqué à au moins un essieu (20) dudit véhicule à travers une brousse ferroviaire avec laquelle ledit dispositif d'auto-alimentation (1) est équipé, ledit essieu (20) étant en rotation pendant le déplacement dudit véhicule, ledit dispositif (1) comprenant au moins un générateur électrique autonome apte à générer de l'énergie électrique à partir d'une rotation dudit essieu (20), ladite énergie électrique étant utilisé pour alimenter en courant un ou plusieurs capteurs et/ou systèmes disposés à bord dudit dispositif (1), ledit générateur électrique autonome étant composé d'au moins un enroulement (4) apte à être fixe par rapport à ladite rotation dudit axe (20), ledit au moins un enroulement (4) étant composé d'au moins une spire d'un matériau électriquement conducteur, et d'au moins un aimant rotatif (5) apte à être fixé audit axe (20) et à être entraîné en rotation par ledit essieu (20), ledit au moins un enroulement (4) étant adapté pour générer alimenté une tension électrique lorsqu'il est placé à une interface avec le au moins un aimant rotatif (5), ladite douille de chemin de fer comprenant un corps de douille (12), un palier (11), une butée de palier (7) et des vis de fixation (6) pour fixation de ladite butée (7) audit axe (20), **caractérisé en ce que** ledit au moins un aimant rotatif (5) est placé sur au moins une tête d'une desdites vis de fixation (6) .

2. Dispositif (1) selon la revendication précédente, **caractérisé en ce que** ledit générateur électrique autonome est du type axial.

3. Dispositif (1) selon l'une quelconque des revendications précédentes, **caractérisé en ce qu'**il comprend au moins un couvercle de douille (3) pour contenir ledit au moins un enroulement fixe (4) dudit générateur et desdits capteurs et/ou systèmes et pour fixer ledit dispositif (1) au corps de douille (12) dudit axe (20).

4. Dispositif (1) selon la revendication précédente, **caractérisé en ce que** ledit générateur électrique autonome est adapté pour assurer une fonction d'odomètre/tachymètre en conditionnant un signal généré par ledit générateur électrique suite à ladite rotation dudit axe (20).

5. Dispositif (1) selon l'une quelconque des revendications précédentes, **caractérisé en ce qu'**il comprend des moyens de gestion et d'accumulation de ladite puissance électrique générée sur ledit au moins un enroulement (4).

6. Dispositif (1) selon l'une quelconque des revendications précédentes, **caractérisé en ce qu'**il comprend:
- au moins un capteur de température (2); et/ou
- au moins un capteur d'accélération (9); et/ou
- au moins un système de transmission sans fil; et/ou
- au moins des moyens électroniques aptes à mesurer la fréquence de l'énergie électrique générée pour réaliser ladite fonction odomètre/tachymètre; et/ou
- au moins un système d'info-mobilité (10) comprenant au moins un système de géolocalisation et/ou au moins un système de télécommunication et/ou au moins un système de communication sans fil pour la réception de données d'un ou plusieurs desdits couvre-brousses (3), lesdits systèmes et/ou capteurs et/ou moyens étant alimentés en énergie électrique par au moins un générateur autonome en interposant lesdits moyens de gestion et d'accumulation de l'énergie électrique.

7. Dispositif (1) selon la revendication 6, **caractérisé en ce que** lesdits moyens de gestion et d'accumulation de ladite puissance électrique sont composés d'au moins un circuit de gestion de la puissance électrique générée et d'au moins une batterie de secours.

8. Dispositif (1) selon la revendication 6 ou 7, **caractérisé en ce que** chacun desdits capteurs et/ou desdits systèmes sans fil et/ou desdits systèmes d'info-mobilité et/ou desdits moyens est alimenté par un circuit spécifique qui lui est dédié.
